Europäisches Patentamt

European Patent Office

Office européen des brevets

(11) Veröffentlichungsnummer: **0 391 009**
**A2**

(12) # EUROPÄISCHE PATENTANMELDUNG

(21) Anmeldenummer: 89710021.0

(22) Anmeldetag: 04.04.89

(51) Int. Cl.5: **G11B 15/14, G11B 27/34, G11B 33/00**

(43) Veröffentlichungstag der Anmeldung:
**10.10.90 Patentblatt 90/41**

(84) Benannte Vertragsstaaten:
**AT BE DE ES FR GB IT LU NL**

(71) Anmelder: **Nokia Graetz GmbH**
**Östliche Karl-Friedrich-Strasse 132 Postfach 1720**
**D-7530 Pforzheim(DE)**

(72) Erfinder: **Apitz, Siegfried, Dipl.-Ing.**
**Ludwig-Windthorst-Strasse 24**
**D-7530 Pforzheim(DE)**
Erfinder: **Schlegel, Werner, Dipl.-Ing.**
**Bayernstrasse 26**
**D-7530 Pforzheim(DE)**
Erfinder: **Stegmüller, Edmund, Dipl.-Ing.**
**Reichenbacherstrasse**
**D-7530 Pforzheim(DE)**

(54) **Videorecorder mit einer Kopftrommeleinheit.**

(57) Die Fertigungstoleranzen einer Kopftrommeleinheit (1) werden durch einen Datenwert (Tv8) einer Verzögerungszeit (Tv) ausgeglichen, die als Betriebswert in einem nichtflüchtigen Datenspeicher (6) zur Einstellung einer Verzögerung des Positionssignales (I(LG)) eines Lagegebers (9) der Kopftrommeleinheit (1) gespeichert ist. Dieser Betriebswert (Tv8) kann in einer Prüfschaltungsanordnung (5) aus den in der Schrägspur eines Referenzvideobandes (14) abgetasteten Vertikalsynchronsignalen (19) und der Schaltflanke des von einer Kopftrommelsteuerschaltung (2) erzeugten Umschaltsignales (SK) für die Umschaltung der Videoköpfe (11, 12) ermittelt und in den nichtflüchtigen Datenspeicher (6) eingespeichert werden.

Fig.1

EP 0 391 009 A2

## Videorecorder mit einer Kopftrommeleinheit

Die Erfindung betrifft einen Videorecorder nach dem Oberbegriff des Anspruches 1.

Die Kopftrommeleinheit eines Videorecorders besteht aus einem trommelförmigen feststehenden Teil, einer in diesem gelagerten Kopfscheibe und einem Antriebsteil, wie beispeilsweise der Seite 110 des Fachbuches von H. Bahr, "Alles über Video", Philips GMbH Hamburg, 1980 zu entnehmen ist. Über die zylinderförmige Außenwand der Kopfscheibe und des feststehenden Kopftrommelteiles wird ein Videoband in einer Halbspirale hinwegtransportiert. Die Kopfscheibe enthält zwei um 180° versetzte Videoköpfe, von denen jeder über eine halbe Umdrehung der Kopfscheibe einer Schrägspur des Videobandes zugeordnet ist. Der Antriebsteil der Kopftrommeleinheit enthält einen Lagegeber, der in einer bestimmten Winkellage des Rotors der Antriebseinheit ein Positionssignal erzeugt und damit eine bestimmte Winkellage der Videoköpfe kennzeichnet. Eine Transportsteuerschaltung regelt die vorgeschriebene Bandgeschwindigkeit und beim Wiedergabebetrieb die Phasenlage des Videobandes so, daß die einzelnen Videoköpfe der Kopftrommeleinheit die ihnen zugeordneten Schrägspuren auf dem Videoband abtasten, wie den Seiten 112 bis 130 des o.g. Fachbuches zu entnehmen ist. Eine Kopftrommelsteuerschaltung regelt die für die Wiedergabe oder Aufnahme erforderliche Drehgeschwindigkeit der Kopfscheibe der Kopftrommeleinheit. Außerdem erzeugt sie das Umschaltsignal, das die Videoköpfe in den erforderlichen Winkellagen der Kopfscheibe umschaltet. Das Umschaltsignal wird von den Positionsimpulsen des Lagegebers der Kopftrommeleinheit synchronisiert und der Umschaltzeitpunkt der Videoköpfe über einen Phasenregler auf die erforderlichen Winkellagen der Kopfscheibe eingestellt. Dieser Umschaltzeitpunkt ist für die einzelnen Typen von Videogeräten normiert und legt eine bestimmte Anzahl von Videozeilen vor dem zwischen zwei Halbbildern angeordneten Vertikalsynchronsignal der Videoübertragung. Die Schrägspur, die die Länge eines Halbbildes aufweist, beginnt somit mit den letzten Zeilen des zuvor auf der benachbarten Schrägsspur abgetasteten Halbbildes. Durch die Vorverlegung des Umschaltvorganges in die letzten Zeilen des zuvor auf der benachbarten Schrägspur abgetasteten Halbbildes wird vermieden, daß die beim Umschalten der Videoköpfe auftretenden Störungen in das Vertikalsynchronsignal fallen und ein Erkennen so gestörter Vertikalsynchronsignale gefährden.

Die Montagegenauigkeit des Lagegebers zur Winkellage der Videoköpfe reicht nicht aus, die erforderliche Genauigkeit des Bezuges der Winkellagen der Videoköpfe zum Positionssignal des Lagegebers der Kopftrommeleinheit herzustellen. Deshalb enthalten bekannte Kopftrommelsteuerschaltungen eine Verzögerungsanordnung als Phasenregler, an dem über ein Potentiometer eine Verzögerungszeit eingestellt wird, mit der die Phasenlage zwischen dem Positionssignal und dem Umschaltzeitpunkt der Videoköpfe fein eingestellt werden kann. Diese Einstellung muß über eine oszilloskopische Messung kontrollirt werden. Dazu ist es erforderlich, ein Oszilloskop an die einzelnen Meßpunkte der Kopftrommelsteuerschaltung anzuschließen.

Der Erfindung liegt die Aufgabe zugrunde, in einem Videorecorder nach dem Oberbegriff des Anspruches 1 die für die Phasenregelung des Umschaltzeitpunktes der Videoköpfe erforderliche Verzögerungszeit derart bereitzustellen, daß zur Einstellung dieser Verzögerungszeit keine zusätzlichen Hilfsmittel erforderlich sind. Diese Aufgabe wird nach der Erfindung durch die im kennzeichnenden Teil des Anspruches 1 angegebenen Merkmale gelöst.

Dadurch, daß gemäß der Erfindung für das Verzögerungssignal ein Datensignal verwendet wird, dessen Datenwert die einzustellende Verzögerungszeit ist, und daß dieses Signal nichtflüchtig als Betriebswert des Videorecorders gespeichert wird, erreicht man, daß dieses Verzögerungssignal in einfacher Weise in einer in einem Rechen- oder einem Vergleichsprozeß einer dem Videorecorder angehörenden Prüfschaltungsanordnung ermittelt und ausgegeben werden kann. Dadurch wird nicht nur die Herstellung derartiger Videorecorder wesentlich vereinfacht, sondern auch eine Nachstellung der Phasenlage, wenn in einem Reparaturfall nach einem Auswechseln der Kopfscheibe eine neue Einstellung der Phasenlage des Kopfumschaltzeitpunktes beim Händler erforderlich wird. Die Einstellung der Phasenlage ist nur noch von der Genauigkeit der Prüfschaltung abhängig und nicht mehr von der Sorgfalt des Händlers.

Die Unteransprüche kennzeichnen vorteilhafte Ausgestaltungen einer Prüfschaltung zur selbsttätigen Einstellung der Verzögerungszeiten als Phasenregelwert und zur nichtflüchtigen Einspeicherung als Betriebswert des Videorecorders. Diese Prüfschaltungsanordnungen erlauben eine Einstellgenauigkeit, die kleiner als eine halbe Bildzeile ist.

Die Erfindung wird nachfolgend anhand vorteilhafter Ausführungsbeispiele näher erläutert. Die zugehörigen Zeichnungen zeigen

Fig. 1 ein Blockschaltbild der Steuerschaltung für die Kopftrommeleinheit eines Videorecorders,

Fig. 2a eine schematische Darstellung des Anfanges einer Schrägspur auf einem Videoband,

Fig. 2b ein Diagramm des Umschaltsignals SK,

Fig. 3 Diagramme a) bis c) zum Vorgang der Ermittlung des Datenwertes der Verzögerungszeit für die Kopftrommelsteueranordnung.

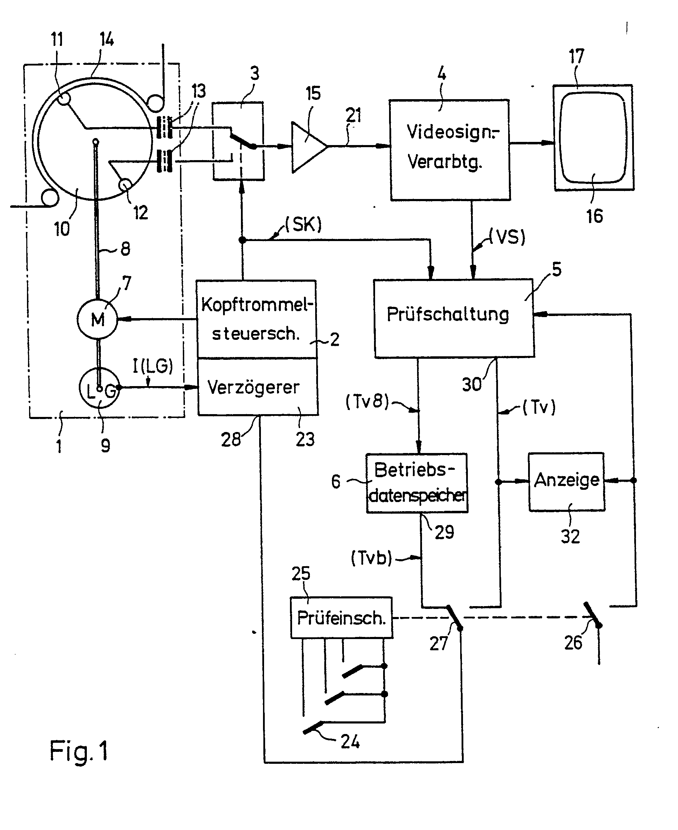

In Fig. 1 ist in einem Blockschaltbild ein Ausschnitt aus einem Videorecorder dargestellt, der eine Kopftrommeleinheit 1 mit einer Kopftrommelsteuerschaltung 2 und einem Kopfumschalter 3, eine dem Kopfumschalter 3 nachgeschaltete Videosignalverarbeitungsanordnung 4, sowie eine Prüfschaltungsanordnung 5 und einen nichtflüchtigen Datenspeicher 6 umfaßt. Die Kopftrommeleinheit 1 enthält eine nicht näher dargestellte, mit dem Chassis des Videorecorders verbundene Kopftrommel, in der eine von einem Motor 7 angetriebene Antriebseinrichtung 8 gelagert ist. Auf der Antriebseinrichtung 8 ist sowohl ein Lagegeber 9 als auch eine Kopfscheibe 10 mit zwei Videoköpfen 11 und 12 und Teilen zweier Kopfübertrager 13 befestigt. Der Lagegeber 9 erzeugt bei einer bestimmten Winkellage der Antriebseinrichtung und damit auch der Kopfscheibe 10 ein Positionssignal I(LG), das der Kopftrommelsteuerschaltung als Ist-Signal zur Regelung der vorgeschriebenen Drehzahl der Kopfscheibe zugeführt wird. Ferner synchronisiert dieses Positionssignal I(LG) ein Umschaltsignal SK, das die Kopftrommelsteuerschaltung 2 zur Steuerung des Kopfumschalters 3 erzeugt. Die Umschaltung der Videoköpfe 11 und 12 , die um 180° versetzt auf der Kopfscheibe 10 angebracht sind, erfolgt derart, daß jeder der Videoköpfe 11 und 12 bei einer halben Umdrehung der Kopfscheibe 10 vollständig eine ihm zugeordnete Schrägspur auf einem an der Kopftrommeleinheit 1 entlangtransportierten Videoband 14 abtastet. Die vom Videoband abgetasteten Videosignale werden über den Kopfübertrager 13, den Kopfumschalter 3 und einen Kopfverstärker 15 der Videosignalverarbeitungsanordnung 4 zugeführt, die die abgetasteten Videosignale zur Darstellung auf dem Bildschirm 16 eines Bildschirmgerätes 17 verarbeitet.

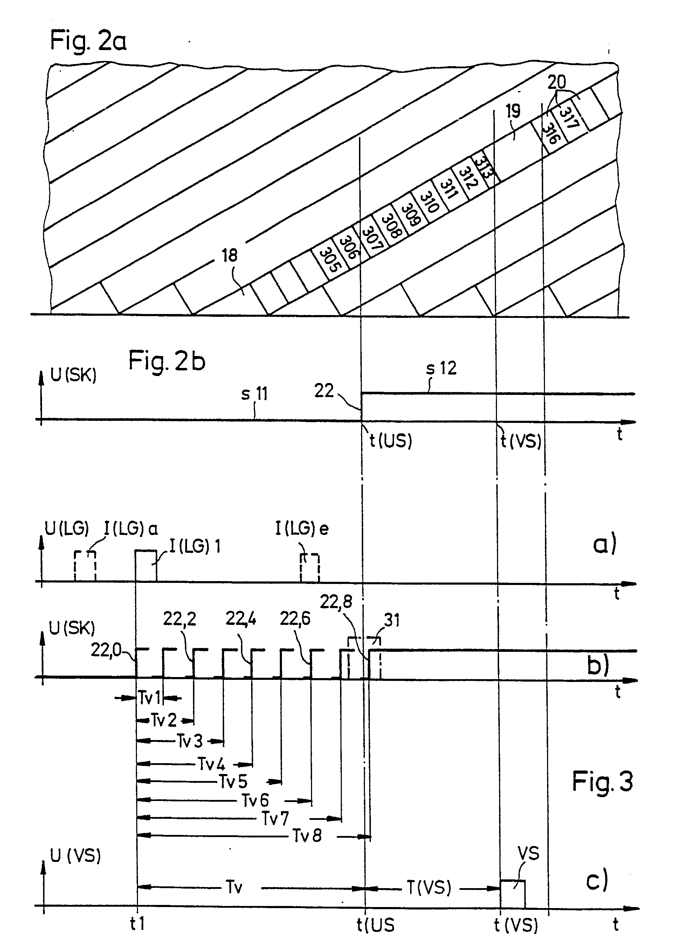

In Fig. 2a ist der Anfang einer Schrägspur 18 zur Aufzeichnung eines Halbbildes auf ein Videoband 14 schematisch dargestellt. Die dargestellte Schrägspur enthält vor dem zweieinhalb Bildzeilen langen Vertikal-Synchronsignal 19 die Videozeilen 305 bis 312,5 eines ersten Halbbildes. An das Vertikalsynchronsignal 19 schließt sich die Aufzeichnung der Zeilen 20 des zugehörigen zweiten Halbbildes an.

Zum Abtatsen der Schrägspur 18 vom Videoband 14 in Fig. 1 wird der Umschaltzeitpunkt t(US) der Videoköpfe 11 und 12 so gelegt, daß er im dargestellten Ausführungsbeispiel sechseinhalb Videozeilen vor dem Vertikalsynchronsignal 19 liegt.

Die Einschaltung der Videoköpfe 11 und 12 in den Videosignalweg 21 des Videorecorders erfolgt durch den Kopfumschalter 3, der von einem in Fig. 2b dargestellten Umschaltsignal S(K) gesteuert wird. Das in der Kopftrommelsteuerschaltung 2 erzeugte Umschaltsignal wechselt an einer Schaltflanke 22 von einem Signalwert s11, der den Videokopf 11 zur Abtastung der Schrägspur eines ersten Halbbildes eingeschaltet erhält, zu einem Signalwert s12, der den Videokopf 12 zur Abtastung einer Schrägspur eines zweiten Halbbildes eingeschaltet erhält. Das in der Kopftrommelsteuerschaltung erzeugte Umschaltsignal S(K) wird von den Positionsimpulse I(LG) des Lagegebers 9 synchronisiert. Zur Einstellung der Schaltflanke 22 des Umschaltsignales SK auf den Sollzeitpunkt t(US) der Kopfumschaltung enthält die Kopftrommelsteuerschaltung 2 eine Verzögerungsanordnung 23. Diese Verzögerungsnaordnung 23 verzögert die eingehenden Positionsimpulse I(LG) um eine Verzögerungszeit Tv, deren Zeitwert der Zeitabstand des Sollumschaltzeitpunktes t(US) vom Zeitpunkt t1 der Ausgabe des Positionssignales I(LG) ist und als Datenwert in dem nichtflüchtgen Datenspeicher 6 gespeichert ist. Dieser Datenwert steht der Kopftrommelsteuerschaltung 2 im eingeschalteten Zustand des Videorecorders dauernd als Betriebswert zur Verfügung. Für die anderen Schrägspuren des Videobandes 14 gilt eine entsprechende Einstellung des Umschaltzeitpunktes der Videoköpfe.

Die Winkellage der Videoköpfe 11 und 12 kann bei der Herstellung oder der Reparatur einer Kopftrommeleinheit nicht in der Genauigkeit zur Lage des vom Lagegeber 9 erzeugten Positionssignales I(LG) eingestellt werden, wie sie für die Abtastung eines Videobandes erforderlich ist. Deshalb wird die Winkellage der Videoköpfe 11 und 12 so eingestellt, daß der Sollzeitpunkt t(US) für die Umschaltung der Videoköpfe mit Sicherheit zeitlich nach dem von der Kopftrommeleinheit ausgegebenen Positionssignal I(LG)1 liegt, wie im Diagramm a) der Fig. 3 schematisch dargestellt ist. In diesem Diagramm a) sind außerdem gestrichelt die beiden Positionsimpulse I(LG)a und I(LG)e in den beiden möglichen Extremlagen der Einstellung einer Kopftrommeleinheit 1 schematisch dargestellt. Um die für die Lage des von der Kopftrommeleinheit 1 ausgegebenen Positionsimpulses I(LG)1 notwenige Verzögerungszeit Tv zur Einstellung der Schaltflanke 22 des Umschaltsignales SK auf den Sollzeitpunkt t(US) zu ermitteln, wird ein Videoband 14 in den in Fig. 1 dargestellten Videorecorder eingelegt, das eine normgenaue Videoaufzeichnung enthält und deshalb ein Referenzvideoband ist. Zur Ermittlung der erforderlichen Verzögerungszeit Tv wird über eine bestimmte Kombination von Bedienungselementen 24 des Videorecorders oder eines Fern-

bedienungsgebers zur Fernbedienung des Video-recorders eine Einschaltanordnung 25 in einen Schaltzustand gesetzt, in dem diese über elektronische Schalter 26 und 27 die Prüfschaltungsanordnung 5 einschaltet und den Verzögerungsdateneingang 28 der Verzögerungsanordnung 23 der Kopftrommelsteuerschaltung 2 vom Datenausgang 29 des nichtflüchtigen Speichers 6 an einen Datenausgang 30 der Prüfschaltungsanordnung 5 umschaltet. Die Prüfschaltung 5 erzeugt nacheinander Verzögerungszeiten unterschiedlicher und im dargestellten Ausführungsbeispiel ansteigender Zeitwerte Tv1 bis Tv8, wie in Diagramm b) der Fig. 3 schematisch dargestellt ist, die über den Datenausgang 30 an den Dateneingang 28 der Verzögerungsanordnung 23 übertragen werden. Die Prüfschaltung 5 prüft, ob die zugehörigen Schaltflanken 22,0 bis 22,8 des davon gesteuerten Umschaltsignales SK, das der Prüfschaltungsanordnung 5 zugeführt wird, in ein eng begrenztes Zeitfenster 31 fällt. Dieses Zeitfenster 31 bildet die Prüfschaltungsanordnung 5 in einem Zeitabstand T(VS) vor Synchronsignalen VS, die im Diagramm c) der Fig. 3 dargestellt sind und die von der Videosignalverarbeitungsanordnung 4 an der Stelle der vom Videoband abgetasteten Vertikalsynchronsignale 19 erzeugt und der Prüfschaltungsanordnung 5 zugeführt werden. Der Zeitabstand T(VS) des Zeitfensters 31 von den der Prüfschaltungsanordnung 5 zugeleiteten Synchronsignale VS entspricht wiederum der zeitlichen Länge der Anzahl von Videozeilen vor dem Vertikalsynchronsignal 19 der abgetasteten Videospur 18, an deren Anfang normgerecht die Umschaltung der Videoköpfe erfolgen soll. Erkennt die Prüfschaltung eine Schaltflanke 22,8 innerhalb des Zeitfensters 31, stoppt sie die Ausgabe von Verzögerungszeiten und speichert den Datenwert Tv8 der zugehörigen Verzögerungszeit Tv in den nichtflüchtigen Datenspeicher 6 als Betriebswert des Videorecorders ein. Solange die Kombination der Bedienungselemente 24 betätigt bleibt, wird dieser Datenwert Tv8 auf einer Anzeigeanordnung 32 des Videorecorders angezeigt. Nach dem Abschalten der Prüfschaltungsanordnung 5 steht der neue, im nichtflüchtigen Datenspeicher abgespeicherte Datenwert Tv8 der Verzögerungszeit Tv der Kopftrommelsteuerschaltung 2 als Betriebswert zur Verfügung.

In einem anderen Ausführungsbeispiel der Prüfschaltungsanordnung 5 mißt die Prüfschaltungsanordnung 5 den zeitlichen Abstand Tv der Schaltflanke 22,0 des Umschaltsignales S(K) das die Kopftrommelsteuerschaltung 2 ohne Verzögerung des Positionssignales I(LG), d.h. bei einem Datenwert "0" des zugeführten Verzögerungssignales erzeugt, zum Sollzeitpunkt t(US) der Umschaltung der Videoköpfe, den die Prüfschaltung als Anfang der Vorlaufzeit T(VS) zu den von der Videosignalverarbeitungsanordnung 4 aus den abgetasteten Vertikalsynchronsignalen 19 erzeugten Synchronsignalen VS bildet und der den Anfang der sechseinhalb Videozeilen vor dem Vertikalsynchronsignal 19 einer Schrägspur 18 darstellt. Der gemessene Zeitabstand Tv wird anschließend als Betriebswert des Videorecorders in den nichtflüchtigen Datenspeicher 6 eingespeichert und nach Abschalten der Prüfschaltungsanordnung 5 der Kopftrommelsteuerschaltung 2 zur Verfügung gehalten.

Auf diese Weise können mit einer hohen Genauigkeit die Herstellungstoleranzen einer Kopftrommeleinheit 1 in einem Videorecorder ausgeglichen werden.

## Ansprüche

1. Videorecorder
- mit einer Kopftrommeleinheit, die zwei auf einer Kopfscheibe angeordnete, jeweils eine Halbbildspur eines Videobandes abtastende Videoköpfe und einen Positionsimpulse erzeugenden Lagegeber enthält,
- ferner mit einem die Videoköpfe je Halbbild umschaltenden Kopfumschalter, dem eine Videosignalverarbeitungsanordnung nachgeschaltet ist,
- und mit einer Kopftrommelsteuerschaltung, der ein Verzögerungssignal zur Einstellung einer derart bemessenen Verzögerungszeit für die die Kopftrommelsteuerschaltung durchlaufenden Positionssignale zugeführt ist, daß die den Zeitpunkt der Umschaltung der Videoköpfe bestimmenden Schaltflanken eines in der Kopftrommelsteuerschaltung erzeugten, den Kopfumschalter steuernden Umschaltsignales eine vorbestimmte Anzahl Videozeilen vor dem auf der zugehörigen Halbbildspur eines Referenzvideobandes abgetasteten Vertikalsynchronsignal liegt,
**dadurch gekennzeichnet,** daß das Verzögerungssignal ein Datensignal ist, dessen Datenwert (Tv8) die einzustellende Verzögerungszeit (Tv) ist und das in einem nichtflüchtigen Datenspeicher (6) als ein Betriebswert des Videorecorders gespeichert ist.

2. Videorecorder nach Anspruch 1, gekennzeichnet durch eine Prüfschaltungsanordnung (5), die im eingeschalteten Zustand aus einem Zeitvergleich des Sollzeitpunktes (t(US)) der Schaltflanke (22) des an der Prüfschaltungsanordnung anliegenden Umschaltsignals (SK) für den Kopfumschalter (3) und dem Zeitpunkt (t1) des zugehörigen Positionssignals (I(LG)) des Lagegebers (9) den Datenwert (Tv8) der einzustellenden Verzögerungszeit (Tv) bildet und nach der Ausgabe dieses Datenwertes den nichtflüchtigen Datenspeicher (6) zur Einspeicherung des den Datenwert enthaltenden Verzögerungssignals wirksam schaltet.

3. Videorecorder nach Anspruch 2, gekennzeichnet durch eine Prüfschaltungsanordnung (5), die im eingeschalteten Zustand nacheinander Verzögerungssignale mit unterschiedlichen Datenwerten (Tv1 ... Tv8) der Verzögerungszeit (Tv) erzeugt und anstelle des nichtflüchtigen Datenspeichers (6) der Kopftrommelsteuerschaltung (2) zuführt und den nichtflüchtigen Datenspeicher zur Einspeicherung desjenigen Datenwertes des Verzögerungssignals (Tv8) wirksam schaltet, bei dem die Schaltflanke (22) des Umschaltsignals (SK) in einem eng begrenzten Zeitfenster (31) liegt, das die vorbestimmte Anzahl Videozeilen von dem auf der zugehörigen Halbbildspur (18) des Referenzvideobandes (14) abgetasteten Vertikalsynchronsignal (19) entfernt ist.

4. Videorecorder nach Anspruch 2, gekennzeichnet durch eine Prüfschaltungsanordnung (5), die im eingeschalteten Zustand den Zeitabstand (Tv) des Sollzeitpunktes (t(US)) der Schaltflanke (22) des Umschaltsignals (SK) vom Zeitpunkt (t1) des zugehörigen Positionssignals (I(LG)1) mißt und als Datenwert (Tv8) der einzustellenden Verzögerungszeit (Tv) ausgibt.

5. Videorecorder nach einem der Ansprüche 2 bis 4, dadurch gekennzeichnet, daß während des eingeschalteten Zustandes der Prüfschaltungsanordnung (5) eine Anzeigeanordnung (32) an die Prüfschaltungsanordnung angeschlossen ist, die den Datenwert (Tv8) der einzustellenden Verzögerungszeit (Tv) anzeigt.

6. Videorecorder nach einem der Ansprüche 2 bis 5, dadurch gekennzeichnet, daß die Prüfschaltungsanordnung (5) durch die Betätigung einer bestimmten Kombination von Bedienungselementen (24) des Videorecorders oder eines zugehörigen Einstellgerätes einschaltbar ist.

Fig. 1

S. Apitz  39-9-1

26.1.89  Sie.

Fig. 2a

20
317
19
316
313
312
311
310
309
308
307
306
305
18

Fig. 2b

U(SK)

22
s 11
s 12

t(US)
t(VS)
t

U(LG)  I(LG)a
I(LG)1
I(LG)e
a)

t

U(SK)
22,2
22,4
22,6
22,8
31
22,0
b)

t

Tv1
Tv2
Tv3
Tv4
Tv5
Tv6
Tv7
Tv8

Fig. 3

U(VS)
VS
c)

Tv
T(VS)
t1
t(US
t(VS)
t

S. Apitz   39 - 9 - 1
27. 1. 89   Sie.